**Europäisches Patentamt**

**European Patent Office**

**Office européen des brevets**

(19)

(11) Veröffentlichungsnummer: **0 089 984**
B1

# EUROPÄISCHE PATENTSCHRIFT

(12)

(45) Veröffentlichungstag der Patentschrift:
06.08.86

(21) Anmeldenummer: **82902904.0**

(22) Anmeldetag: **27.09.82**

(86) Internationale Anmeldenummer:
**PCT/EP 82/00216**

(87) Internationale Veröffentlichungsnummer:
**WO 83/01363** (14.04.83 Gazette 83/9)

(51) Int. Cl.⁴: **H 05 B 39/02**

(54) **SCHALTUNGSANORDNUNG ZUR FUNKENSTÖRUNG BEI HELLIGKEITSSTEUERGERÄTE NACH DEM PHASENANSCHNITTSPRINZIP.**

(30) Priorität: 06.10.81 DE 3139673

(43) Veröffentlichungstag der Anmeldung:
05.10.83 Patentblatt 83/40

(45) Bekanntmachung des Hinweises auf die Patenterteilung:
06.08.86 Patentblatt 86/32

(84) Benannte Vertragsstaaten:
**AT BE CH FR GB LI SE**

(56) Entgegenhaltungen:
**FR - A - 2 450 025**
**GB - A - 2 032 664**

(73) Patentinhaber: **BROWN, BOVERI & CIE Aktiengesellschaft Mannheim, Kallstadter Strasse 1, D-6800 Mannheim Käfertal (DE)**

(72) Erfinder: **KNEISEL, Dietmar, Winkeln 9, D-5885 Schalksmühle (DE)**

(74) Vertreter: **Kempe, Wolfgang, Dr. et al, c/o Brown, Boveri & Cie AG Postfach 351, D-6800 Mannheim 1 (DE)**

## Beschreibung

Die Erfindung betrifft eine Schaltungsanordnung zur Funkentstörung bei ferngesteuerten Helligkeitssteuergeräten nach dem Phasenanschnittprinzip, wobei ein Halbleiterschalter mit einer Entstördrossel in Reihe zum Laststromkreis geschaltet ist und ein Kondensator parallel zu Halbleiterschalter und Entstördrossel liegt.

Die bekannten Helligkeitssteuergeräte dieser Art, die manuell bedienbar sind, besitzen einen Trennschalter, durch den die Schaltungsanordnung vom Netz getrennt werden kann.

Helligkeitssteuergeräte, die als Fernschalter ausgeführt sind und unter Ausnutzung von Niederspannungsleitungen für die Übertragung von Sendefrequenzen mittels eines Senders aus der Ferne geschaltet werden, sind ständig am Netz angeschlossen. Da somit die aus Drossel und Kondensator bestehenden Funkentstör-Komponenten dieser Helligkeitssteuergeräte ständig am Netz liegen, wird durch den im Ausschaltezustand niederohmigen Widerstand von Glühbirnen durch den Kondensator die Sendespannung stark gedämpft.

Aufgrund dessen wird innerhalb eines Fernsteuer-Systems die maximal anschliessbare Anzahl von Helligkeitssteuergeräten stark begrenzt. Es können somit innerhalb eines solchen Systems, dessen Sender z.B. 256 Schaltstellen bedienen kann, max. höchstens 16 Helligkeitssteuergeräte angeschlossen werden. In vielen Fällen wird jedoch der Anschluss von einer grösseren Anzahl Helligkeitssteuergeräte gefordert. Da die Sendespannung innerhalb eines Systems die Ansprechwelle nicht unterschreiten darf, ist aufgrund des geschilderten Umstandes die Anordnung von Helligkeitssteuergeräten begrenzt.

Um dies zu erreichen, wurde versucht, die Funkenstör-Komponenten derart auszubilden, dass ein Kondensator mit wesentlich geringerer Kapazität, z.B. nur etwa 30% der sonst üblichen, und dagegen die Entstördrossel mit mehr Spulenwindungen vorgesehen wurden. Hierdurch wurden die geforderten Entstörwerte erreicht, dagegen allerdings die Entstördrossel aufgrund der grösseren Windungszahlen in den Materialkosten wie auch in der Herstellung versteuert. Darüber hinaus entstand hierbei das Problem der höheren Erwärmung der Spule, so dass dadurch die Baugrösse des gesamten Gerätes nachteilig beeinflusst wurde.

Schliesslich wurde auch durch diese Massnahme nicht erreicht, eine grössere Anzahl als maximal 16 Helligkeitssteuergeräte innerhalb eines Systems zu betreiben.

Aufgabe der Erfindung ist es, die Anzahl von aus der Ferne bedienbaren Helligkeitssteuergeräten in einem Fernsteuer-System mit trägerfrequenter Ausnutzung von Niederspannungsleitungen zu erhöhen, ohne die hochfrequente Sendespannung stark zu belasten.

Erfindungsgemäss wird dies dadurch gelöst, dass durch die Anordnung einer weiteren Drossel im Laststromkreis bei nicht leitendem Halbleiterschalter die Dämpfung der Funkenstör-Komponenten bei Geräten mit trägerfrequenter Ausnutzung von Niederspannungsleitungen aufgehoben ist. Durch diese Anordnung wird im Ausschaltzustand die Reihenschaltung Drossel und Kondensator für die Sendespannung hochohmig. Somit wird die sonst erfolgende starke Belastung der hochfrequenten Sendespannung auf den Niederspannungsleitungen aufgehoben. Die Erfindung besteht weiter darin, dass als weitere Drossel ein Ferritkern mit nur wenigen Spulenwindungen vorgesehen ist. Dadurch, dass der Ferritkern die Wirkung aufweist, bei Stromfluss eine schnelle Sättigung der Drossel herbeizuführen, wird erreicht, dass die weitere Drossel bei Einschaltung des ferngesteuerten Helligkeitssteuergerätes seine Wirkung auf die Funkentstör-Komponenten verliert und somit im eingeschalteten Zustand einwandfreie Funkentstörwerte erreicht werden.

Die Schaltungsanordnung nach der Erfindung ist in der Zeichnung in mehreren Ausführungsbeispielen dargestellt.

Es zeigt:

Fig. 1 ein Schaltbild,
Fig. 2 den Aufbau eines fernsteuerbaren Helligkeitssteuergerätes in Unterputz-Ausbildung, teilweise im Schnitt und
Fig. 3 die Darstellung eines fernsteuerbaren Helligkeitssteuergerätes in Aufbauausbildung als Steckermodul.

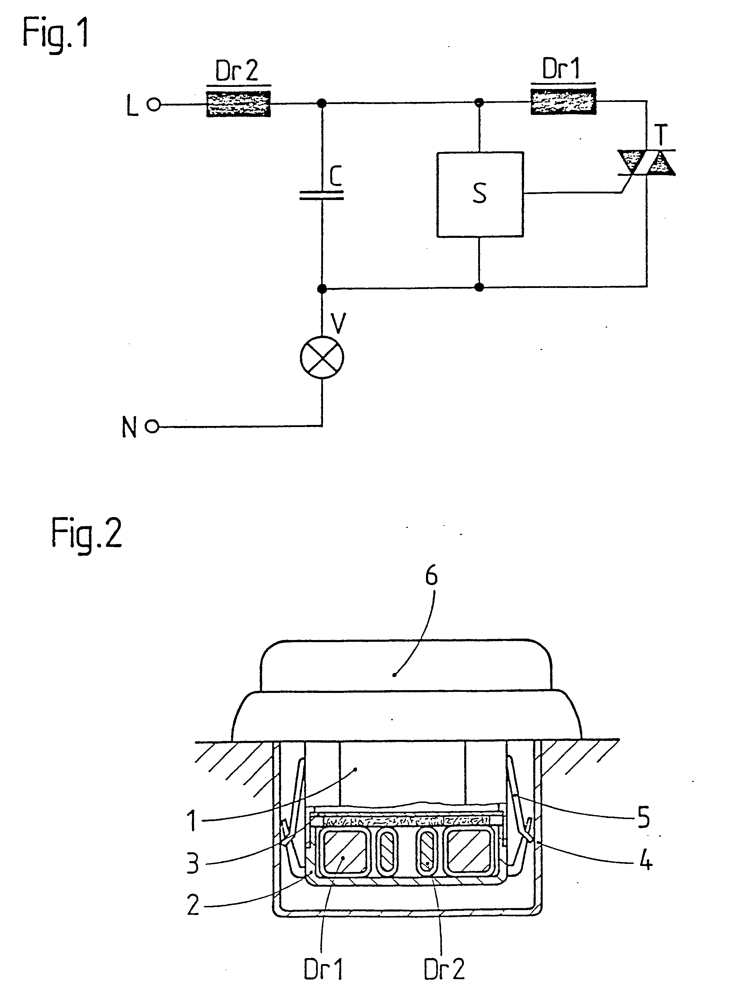

In dem Schaltbild nach Fig. 1 ist erkennbar, dass das fernsteuerbare Helligkeitssteuergerät mit den Klemmen L und N an ein Niederspannungsleitungsnetz anschliessbar ist. Das Helligkeitssteuer besteht aus den für diese Einrichtungen bekannten Bauelementen, wie Triac T als Halbleiterschalter, der von der Steuerung S seine Zündimpulse gemäss entsprechender Einstellung dieser Steuerung erhält.

Zur Funkentstörung dienen in bekannter Weise die Entstördrossel Dr 1 und der Kondensator C. Als Verbraucher V kann eine Glühlampe oder ein anderes steuerbares Gerät, z.B. Motor, vorgesehen sein. Erfindungsgemäss ist in dem Laststromkreis vor dem Kondensator C eine weitere Drossel Dr 2 angeordnet. Diese weitere Drossel Dr 2 besteht aus einem Ferritkern mit nur wenigen Spulenwindungen. Als solche benötigt diese weitere Drossel Dr 2 nur ein äusserst geringes Bauvolumen.

Wie aus der Fig. 2 ersichtlich, kann diese weitere Drossel Dr 2 bei der Ausbildung eines Helligkeitssteuergerätes für Unterputzanordnung innerhalb des Wickelloches der Entstördrossel Dr 1 angeordnet sein. Dabei besteht dieses Helligkeitssteuergerät für Unterputzanordnung aus einem zweiteiligen Gehäuse, nämlich einem Gehäuseoberteil 1 und einem Gehäuseunterteil 2, zwischen denen eine Leiterplatte 3 mit den übrigen elektronischen Bauteilen, z.B. dem Triac T und den Elementen der Steuereinrichtung S angeordnet ist. Unterhalb der Leiterplatte 3 innerhalb des Gehäuseunterteils 2 sind die Entstördrossel Dr 1 und die weitere Drossel Dr 2 untergebracht. Dieses Helligkeitssteuergerät kann in bekannter Weise mittels Spreizkrallen 5 in eine Unterputzdose 4 befestigt werden. Nach aussen hin
wird es durch eine Abdeckplatte 6 verschlossen.

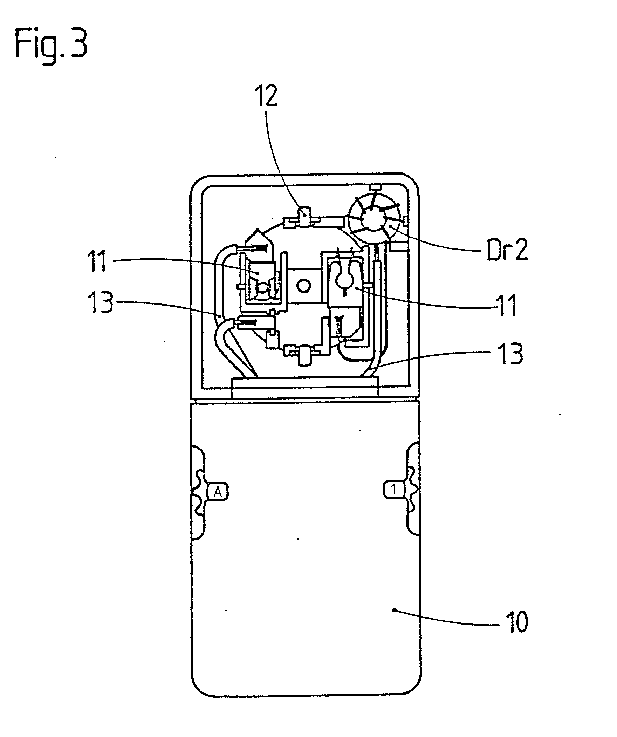

Bei der Darstellung nach Fig. 3 ist das Helligkeitssteuergerät mit seinen elektronischen Bauteilen, einschliesslich seiner für die Gerätewahl
und die Codewahl zur Fernbildung vorgesehenen
Einstellgliedern, in einem Gehäuse 10 untergebracht, an dem ein Steckerteil mit den Steckbuchsen 11 und einem Schutzkontaktbügel 12 angebaut ist. Wie aus dem offen dargestellten
Steckerteil erkennbar ist, wird hierbei die weitere
Drossel Dr 2 in einem freien Raum des Steckerteils eingebaut und kann hier durch entsprechende Halterungen des Gehäuses dieses Steckerteils
fixiert werden. Die elektrische Verbindung der
Spulenwicklung dieser weiteren Drossel Dr 2 ist
hierbei äusserst einfach zwischen der Steckbuchse 11 und der einen Eingangsleitung 13 des
Helligkeitssteuergerätes durchführbar.

**Patentansprüche:**

1. Schaltungsanordnung zur Funkentstörung
bei ferngesteuerten Helligkeitssteuergeräten
nach dem Phasenanschnittprinzip, wobei ein
Halbleiterschalter (T) mit einer Entstördrossel (Dr
1) in Reihe zum Laststromkreis geschaltet ist und
ein Kondensator (C) parallel zu Halbleiterschalter
und Entstördrossel liegt, dadurch gekennzeichnet, dass durch die Anordnung einer weiteren
Drossel (Dr 2) im Laststromkreis bei nicht leitendem Halbleiterschalter (T) die Dämpfung der
Funkentstör-Komponenten (Dr 1, C) bei Geräten
mit trägerfrequenter Ausnutzung von Niederspannungsleitungen aufgehoben ist.

2. Schaltungsanordnung nach Anspruch 1, dadurch gekennzeichnet, dass als weitere Drossel
(Dr 2) ein Ferritkern mit nur wenigen Spulenwindungen vorgesehen ist.

**Claims**

1. Circuit arrangement for radio interference
suppression in remote-controlled brightness
control devices according to the phase control
principle, in which arrangement a semiconductor
switch (T) and an interference suppression choke
(Dr 1) are connected in series with the load circuit
and a capacitor (C) is connected in parallel with
the semiconductor switch and the interference
suppression choke, characterized in that due to
the arrangement of another choke (Dr 2) in the
load circuit the attenuation of the radio interference suppression components (Dr 1, C) is cancelled in devices with carrier-frequency utilization of low-voltage lines when the semiconductor
switch (T) is not conducting.

2. Circuit arrangement according to Claim 1,
characterized in that a ferrite core having only a
few turns of a coil is provided as the further
choke (Dr 2).

**Revendications**

1. Circuit d'antiparasitage pour appareils télécommandés de commande d'éclairage selon le
principe de la commande d'amorçage, un interrupteur à semiconducteur (T) étant monté, avec
bobine d'antiparasitage (Dr 1), en série avec le
circuit de courant de charge et un condensateur
(C) étant monté en parallèle avec l'interrupteur à
semiconducteur et la bobine d'antiparasitage,
caractérisé par le fait que par le montage d'une
bobine supplémentaire (Dr 2) dans le circuit de
courant de charge, lorsque l'interrupteur à semiconducteur (T) ne conduit pas, l'amortissement
des composants d'antiparasitage (Dr 1, C) est
supprimé pour des appareils utilisant des courants porteurs sur des lignes à basse tension.

2. Circuit selon la revendication 1, caractérisé
par le fait que, comme bobine suplémentaire (Dr
2), il est prévu un noyau de ferrite avec seulement
un petit nombre de spires.

## Fig.1

## Fig.2

Fig.3